# EUROPÄISCHE PATENTSCHRIFT

(11) **EP 0 963 247 B1**
(45) Veröffentlichungstag und Bekanntmachung des Hinweises auf die Patenterteilung: **30.06.2004**
(21) Anmeldenummer: 98952699.1
(22) Anmeldetag: 05.10.1998
(51) Int. Cl.: B01J 19/32, B01J 8/02

(54) **REAKTOR FÜR DIE KATALYTISCHE UMSETZUNG VON REAKTIONSMEDIEN, INSBESONDERE VON GASFÖRMIGEN REAKTIONSMEDIEN**
REACTOR FOR THE CATALYTIC REACTION OF REACTION MEDIA, IN PARTICULAR GASEOUS REACTION MEDIA
REACTEUR POUR LA REACTION CATALYTIQUE DE MILIEUX REACTIONNELS, EN PARTICULIER DE MILIEUX REACTIONNELS GAZEUX

(30) Priorität: 06.12.1997 DE 19754185
(43) Veröffentlichungstag der Anmeldung: 15.12.1999
(73) Patentinhaber: DEG Engineering GmbH, 45881 Gelsenkirchen (DE)
(72) Erfinder: DAUN, Klaus-Dieter, D-45289 Essen (DE)
(74) Vertreter: Honke, Manfred, Dr.-Ing.
(86) Internationale Anmeldenummer: PCT/EP1998/006337
(87) Internationale Veröffentlichungsnummer: WO 1999/029416

(56) Entgegenhaltungen:
- EP-A- 0 766 999
- DE-A- 2 016 614
- DE-A- 2 948 123
- US-A- 4 101 287
- PATENT ABSTRACTS OF JAPAN vol. 010, no. 303 (C-378), 16. Oktober 1986 & JP 61 118132 A (MITSUBISHI PETROCHEM CO LTD), 5. Juni 1986

## Beschreibung

Die Erfindung betrifft einen Reaktor für die katalytische Umsetzung von Reaktionsmedien, insbesondere von gasförmigen Reaktionsmedien, mit einem Plattenwärmetauscher zum Kühlen eines Katalysators in einem Reaktorbehälter, wobei in dem Reaktorbehälter nebeneinander mit vorgegebenem Abstand voneinander Wärmetauscherplatten angeordnet und zwischen den Wärmetauscherplatten der von dem jeweiligen Reaktionsmedium durchströmte Katalysator unter Festbettbildung angeordnet ist, mit einer Kühlmediumzuführung im Bereich der Behälterdecke und einer Kühlmediumabführung im Bereich des Behälterbodens.

In der chemischen Reaktionstechnik ist der Einsatz von Reaktoren bekannt, mit deren Hilfe beispielsweise die katalytische Umsetzung von flüssigen oder gasförmigen Reaktionsmedien stattfindet. Im Zuge einer solchen Umsetzung muß ein beträchtlicher Teil der Reaktionswärme abgeführt werden. Die Wärmeabführung kann im Wege eines direkten Wärmeaustausches erfolgen. So ist beispielsweise die direkte Kühlung mit flüssigen Kühlmedien bei exothermen Reaktionen in der Gasphase, die isotherm verlaufen sollen, eine häufig angewandte Kühlmethode. Denn bei der Kühlung mit flüssigen Kühlmedien können hinreichend große Wärmeübergangsflächen Berücksichtigung finden, während flüssige Kühlmedien wegen ihrer großen Wärmekapazität besonders geeignet sind, die Temperaturen unter Kontrolle zu halten, wenngleich auch bei einer sogenannten Burn-Down-Operation eine hinreichende Energieabfuhr gewährleistet sein muß.

Man kennt als Reaktoren Rohrbündelapparate, bei denen der Katalysator entweder in den Rohren oder außerhalb der Rohre im Mantelraum angeordnet ist. Je größer der bei der Reaktion umgesetzte Wärmebetrag und je höher die Ansprüche an die Gleichmäßigkeit der Temperaturverteilung sind, desto kleiner muß der Rohrdurchmesser sein, wenn der Katalysator in den Rohren untergebracht ist, und desto enger muß der Rohrabstand sein, wenn der Katalysator außerhalb der Rohre angeordnet ist. Insoweit ist die Auslegung derartiger Rohrbündelapparate problematisch. Das gilt auch für das Einfüllen und den Austausch des Katalysators.

Es ist ferner ein Reaktor der eingangs beschriebenen Ausführungsform bekannt, bei dem die Wärmetauscherplatten einerseits Zwischenräume zur Führung des Kühlmediums begrenzen, andererseits Zwischenräume zur Aufnahme des Katalysators, und zwar in wechselnder Folge. Bei dieser bekannten Ausführungsform ist eine Mehrzahl von Plattenpaketen in vertikaler Orientierung gleichsam fischgratartig bzw. wellenlinienförmig angeordnet. Das ist nicht nur in konstruktiver Hinsicht verhältnismäßig kompliziert, sondern in strömungstechnischer Hinsicht nachteilig. Hinzu kommt, daß dieser bekannte Reaktor im Kreuzstromverfahren arbeitet, weil das Kühlmedium vertikal und das Reaktionsmedium horizontal geführt wird. Sofern Wärme zugeführt und nicht abgeführt werden muß, kann anstelle des Kühlmediums auch ein Heizmedium eingesetzt werden (vgl. PCT WO 95/01834).

Der Erfindung liegt die Aufgabe zugrunde, einen Reaktor für die katalytische Umsetzung von Reaktionsmedien, insbesondere von gasförmigen Reaktionsmedien, der eingangs beschriebenen Ausführungsform zu schaffen, der sich durch einen in bedienungstechnischer und strömungstechnischer Hinsicht einfachen und besonders funktionsgerechten Aufbau mit optimalem Wirkungsgrad auszeichnet.

Diese Aufgabe löst die Erfindung durch einen Reaktor für die katalytische Umsetzung von Reaktionsmedien, insbesondere von gasförmigen Reaktionsmedien, mit einem Plattenwärmetauscher zum Kühlen eines Katalysators in einem Reaktorbehälter, wobei in dem Reaktorbehälter nebeneinander mit vorgegebenem Abstand voneinander Wärmetauscherplatten angeordnet und zwischen den Wärmetauscherplatten der von dem jeweiligen Reaktionsmedium durchströmte Katalysator unter Festbettbildung angeordnet ist, mit einer Kühlmediumzuführung im Bereich der Behälterdecke und einer Kühlmediumabführung im Bereich des Behälterbodens,
wobei die Wärmetauscherplatten als von dem Kühlmedium durchströmte Thermobleche ausgebildet sind, die aus zumindest zwei Blechplatten bestehen, die an vorgegebenen Punkten unter Bildung von elliptischen Strömungskanälen zusammengeschweißt sind,
wobei der Plattenwärmetauscher aus den Thermoblechen an die Behälterinnenwand angepasst ist und auf einen Siebboden aufgesetzt ist,
wobei der Siebboden eine Maschenweite aufweist, die geringer als die Korngröße der Katalysatoren ist,
und wobei im Bereich des Behälterbodens eine Reaktionsmediumzuführung und im Bereich der Behälterdecke eine Reaktionsmediumabführung vorgesehen und das jeweilige Reaktionsmedium im Gegenstrom zu dem Kühlmedium geführt ist. - Im Rahmen der Erfindung kann anstelle des Kühlmediums auch mit einem Heizmedium gearbeitet werden, wenn bei der katalytischen Reaktion Wärme nicht abgeführt, sondern zugeführt werden muss. Stets wird eine einwandfreie Temperaturlenkung entlang der Reaktionsstrecke erreicht. Denn bei Thermoblechen handelt es sich um mindestens zwei Blechplatten aus rostfreiem Stahl, die an vorgegebenen Punkten zusammengeschweißt und unter gleichsam Kissenbildung derart ausgeformt sind, dass elliptische Strömungskanäle entstehen, welche infolge der kissenförmigen Ausbildung die Turbulenz der Strömung erhöhen und damit zu hervorragenden Wärmeübertragungsverhältnissen führen. In diesen Strömungskanälen zirkuliert das Kühlmedium oder gegebenenfalls auch Heizmedium. Derartige Thermobleche sind selbsttragend und ermöglichen die Verwirklichung eines kompakten Wärmetauschers mit großer Heizflächendichte ohne Strömungstotzonen, wobei eine Anpassung an die räumlichen Einbauverhältnisse und folglich an die Behälterinnenwand des Reaktors unschwer möglich ist. Da die Thermobleche nicht nur die Funktion der Wärmetauscherplatten übernehmen, sondern auch die für das Kühlmedium (ggf. Heizmedium) erforderlichen Strömungskanäle bilden, kann bei dem erfindungsgemäßen Verfahren im Gegenstromverfahren gearbeitet werden, zumal sich der Festbettkatalysator in den Zwischenräumen zwischen den Wärmetauscherplatten bzw. Thermoblechen befindet. Im ganzen entsteht eine einfache und dennoch funktionsgerechte und in strömungstechnischer Hinsicht vorteilhafte Bauweise, welche sich durch optimalen Wirkungsgrad auszeichnet. Diese technischen Wirkungen werden dadurch noch optimiert, daß nach einer bevorzugten Ausführungsform der Erfindung die Thermobleche als im wesentlichen - bis auf die Kissenausbildungen - geradflächige Bleche ausgebildet und geradlinig in vertikaler Orientierung auf dem Siebboden in dem Reaktorbehälter angeordnet sind. Dadurch wird eine in strömungstechnischer Hinsicht besonders vorteilhafte Ausführungsform verwirklicht, weil eine Umlenkung weder des Kühlmediums (ggf. Heizmediums) noch des Reaktionsmediums entlang der Reaktionsstrecke erforderlich ist.

Weitere erfindungswesentliche Merkmale sind im folgenden aufgeführt. So sieht die Erfindung vor, daß der Behälterboden und/oder die Behälterdecke lösbar mit dem Behältermantel des Reaktorbehälters verbunden sind und der Siebboden mit dem Plattenwärmetauscher aus den Thermoblechen und dem Katalysator aus dem Reaktorbehälter entnehmbar ist. Auf diese Weise werden sowohl das Einfüllen als auch der Austausch des Katalysators erheblich erleichtert, wobei es sich bei der lösbaren Behälterdecke um eine Behälterhaube handeln kann. Ferner empfiehlt die Erfindung, daß die Thermobleche zu einem oder mehreren Plattenpaketen zusammengesetzt sind, so daß eine in montagetechnischer und anpassungstechnischer Hinsicht besonders vorteilhafte Bauweise verwirklicht wird. Vorzugsweise liegt die Füllhöhe des Katalysators zwischen den Thermoblechen 15 cm bis 20 cm unterhalb der Oberkante des Plattenwärmetauschers, so daß Reaktionsstrecken ohne Überschlag gewährleistet sind.

Im folgenden wird die Erfindung anhand einer lediglich ein Ausführungsbeispiel darstellenden Zeichnung näher erläutert; es zeigen:

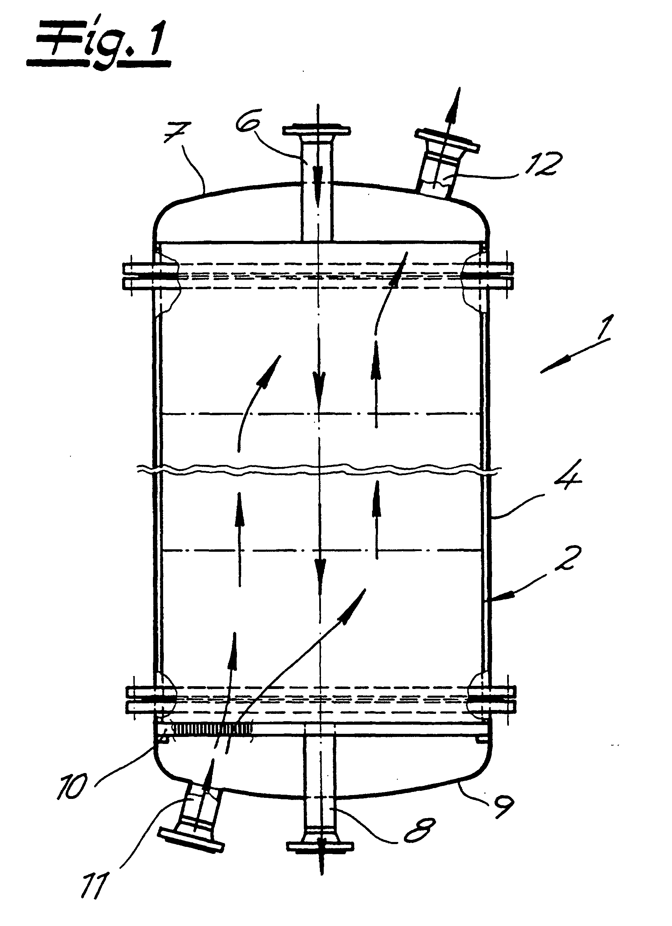

- Fig. 1: einen schematischen Vertikalschnitt durch einen erfindungsgemäßen Reaktor,

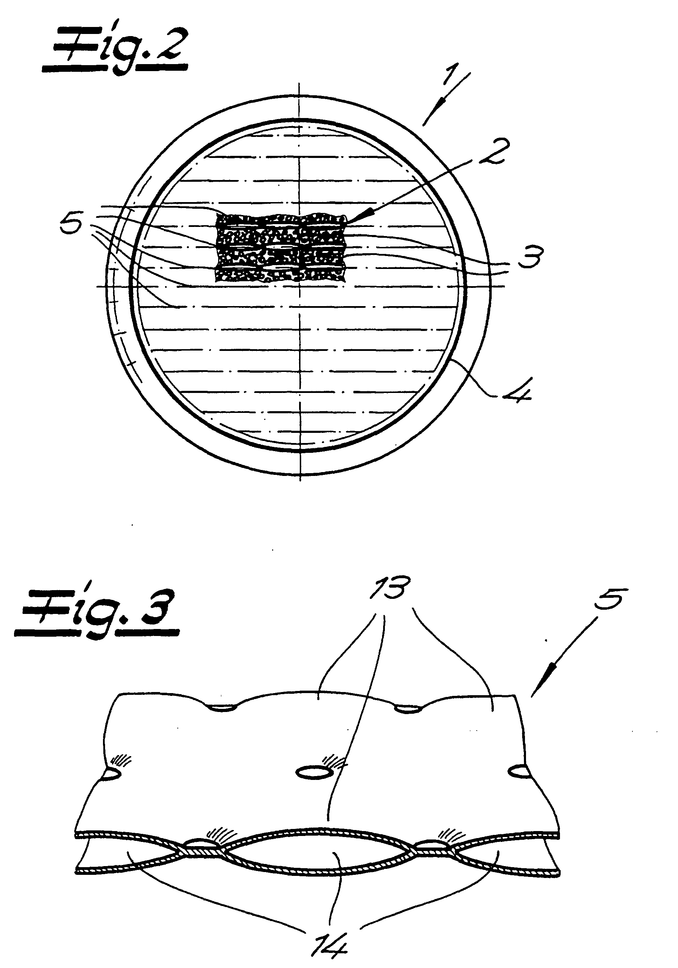

- Fig. 2: einen schematischen Horizontalschnitt durch den Gegenstand nach Fig. 1 und
- Fig. 3: ausschnittsweise ein Thermoblech in schematischer Darstellung.

In den Figuren ist ein Reaktor 1 für die katalytische Umsetzung von Reaktionsmedien, insbesondere von gasförmigen Reaktionsmedien, dargestellt. Dieser Reaktor 1 weist einen Plattenwärmetauscher 2 zum Kühlen eines Katalysators 3 in einem Reaktorbehälter 4 auf. In dem Reaktorbehälter 4 sind nebeneinander mit vorgegebenem Abstand voneinander Wärmetauscherplatten 5 angeordnet. Zwischen den Wärmetauscherplatten 5 ist der von dem jeweiligen Reaktionsmedium durchströmte Katalysator 3 unter Festbettbildung angeordnet. Ferner sind eine Kühlmediumzuführung 6 im Bereich der Behälterdecke 7 und eine Kühlmediumabführung 8 im Bereich des Behälterbodens 9 vorgesehen.

Die Wärmetauscherplatten sind als von dem Kühlmedium durchströmte Thermobleche 5 ausgebildet. Der Plattenwärmetauscher 2 aus den Thermoblechen 5 ist der Behälterinnenwand angepaßt und auf einen Siebboden 10 aufgesetzt. Der Siebboden 10 weist eine Maschenweite auf, die geringer als die Korngröße des Katalysators 3 ist, bei dem es sich um Kugeln, Zylinder od. dgl. Preßlinge handeln kann. Im Bereich des Behälterbodens 9 ist eine Reaktionsmediumzuführung 11 und im Bereich der Behälterdecke 7 eine Reaktionsmediumabführung 12 vorgesehen. Das jeweilige Reaktionsmedium ist im Gegenstrom zu dem Kühlmedium geführt. Das ist durch Pfeile angedeutet. Ein solches Gegenstromverfahren läßt sich grundsätzlich auch dann verwirklichen, wenn das Reaktionsmedium oben in den Reaktorbehälter 4 eintritt und unten aus dem Reaktorbehälter 4 austritt und umgekehrt das Kühlmedium unten in den Reaktorbehälter 4 eintritt und oben aus dem Reaktorbehälter 4 austritt.

Der Behälterboden 9 und/oder die Behälterdecke 7, bei der es sich vorzugsweise um eine Haube handelt, sind lösbar mit dem Behältermantel des Reaktorbehälters 4 verbunden. Der Siebboden 10 ist mit dem Plattenwärmetauscher 2 und dem Katalysator 3 aus dem Reaktorbehälter 4 entfernbar.

Die Thermobleche 5 sind als im wesentlichen geradflächige punktgeschweißte Bleche mit kissenartigen Ausformungen 13 und elliptischen Strömungskanälen 14 ausgebildet und geradlinig in vertikaler Orientierung auf dem Siebboden angeordnet. Dadurch werden die Strömungsverhältnisse für einerseits das Reaktionsmedium und andererseits das Kühlmedium optimiert, weil insoweit auf die Strömung des Reaktionsmediums und Kühlmediums behindernde Umlenkungen verzichtet wird. - Die Thermobleche 5 können zu einem oder mehreren Plattenpaketen zusammengesetzt sein. Die Füllhöhe des Katalysators 3 zwischen den Thermoblechen liegt bei 15 cm bis 20 cm unterhalb der Oberkante des Plattenwärmetauschers 2 bzw. seiner Thermobleche 5.

Im Rahmen der Erfindung kann sich die Reaktionsmediumzuführung 11 auch im Bereich der Behälterdecke 7 und die Reaktionsmediumabführung 12 im Bereich des Behälterbodens 9 befinden.

## Patentansprüche

1. Reaktor für die katalytische Umsetzung von Reaktionsmedien, insbesondere von gasförmigen Reaktionsmedien, mit einem Plattenwärmetauscher (2) zum Kühlen eines Katalysators (3) in einem Reaktorbehälter (4), wobei in dem Reaktorbehälter (4) nebeneinander mit vorgegebenem Abstand voneinander Wärmetauscherplatten (5) angeordnet und zwischen den Wärmetauscherplatten (5) der von dem jeweiligen Reaktionsmedium durchströmte Katalysator (3) unter Festbettbildung angeordnet ist, mit einer Kühlmediumzuführung (6) im Bereich der Behälterdecke (7) und einer Kühlmediumabführung (8) im Bereich des Behälterbodens (9),
wobei die Wärmetauscherplatten (5) als vom Kühlmedium durchströmte Thermobleche (5) ausgebildet sind, die aus zumindest zwei Blechplatten bestehen, die an vorgegebenen Punkten unter Bildung von elliptischen Strömungskanälen zusammengeschweißt sind,
wobei der Plattenwärmetauscher (2) aus den Thermoblechen (5) an die Behälterinnenwand angepasst ist und auf einen Siebboden (10) aufgesetzt ist,
wobei der Siebboden (10) eine Maschenweite aufweist, die geringer als die Korngröße der Katalysatoren ist,
und wobei im Bereich des Behälterbodens (9) eine Reaktionsmediumzuführung (11) und im Bereich der Behälterdecke (7) eine Reaktionsmediumabführung (12) vorgesehen und das jeweilige Reaktionsmedium im Gegenstrom zu dem Kühlmedium geführt ist.

2. Reaktor nach Anspruch 1, **dadurch gekennzeichnet, daß** der Behälterboden (9) und/oder die Behälterdecke (7) lösbar mit dem Behältermantel des Reaktorbehälters (4) verbunden sind und der Siebboden (10) mit dem Plattenwärmetauscher (2) und dem Katalysator (3) aus dem Reaktorbehälter (4) entnehmbar ist.

3. Reaktor nach Anspruch 1 oder 2, **dadurch gekennzeichnet, daß** die Thermobleche (5) als im wesentlichen geradflächige Bleche ausgebildet und geradlinig in vertikaler Orientierung auf dem Siebboden (10) angeordnet sind.

4. Reaktor nach einem der Ansprüche 1 bis 3, **dadurch gekennzeichnet, daß** die Thermobleche (5) zu einem oder mehreren Plattenpaketen zusammengesetzt sind.

5. Reaktor nach einem der Ansprüche 1 bis 4, **dadurch gekennzeichnet, daß** die Füllhöhe des Katalysators (3) zwischen den Thermoblechen (5) 15 cm bis 20 cm unterhalb der Oberkante des Plattenwärmetauschers (2) bzw. seiner Thermobleche (5) liegt.

## Claims

1. A reactor for the catalytic conversion of reactants, particularly of gaseous reactants, comprising a plate heat exchanger (2) for cooling a catalyst (3) in a reactor vessel (4), wherein heat exchanger plates (5) are disposed side by side at a predetermined spacing from each other in the reactor vessel (4) and the catalyst (3) through which the respective reactant flows is disposed between the heat exchanger plates (5) forming a fixed bed, and comprising a coolant inlet (6) in the region of the vessel lid (7) and a coolant outlet (8) in the region of the vessel base (9),
wherein the heat exchanger plates (5) are formed as heat transfer plates (5) through which the coolant flows and consist of at least two sheet metal plates which are welded together at predetermined points with the formation of elliptical flow channels,
wherein the plate heat exchanger (2) comprising the heat exchanger plates (5) is matched to the vessel inner wall and is placed on a screen base (10),
wherein the screen base (10) has a mesh aperture which is less than the particle size of the catalysts,
and wherein a reactant inlet (11) is provided in the region of the vessel base (9) and a reactant outlet (12) is provided in the region of the vessel lid (7), and the respective reactant is conveyed counter-current to the coolant.

2. A reactor according to claim 1, **characterised in that** the vessel base (9) and/or the vessel lid (7) are removably attached to the vessel shell of the reactor vessel (4) and the screen base (10) can be removed from the reactor vessel (4) with the plate heat exchanger (2) and the catalyst (3).

3. A reactor according to claim 1 or 2, **characterised in that** the heat exchanger plates (5) are formed as substantially straight, flat sheets and are disposed rectilinearly in a vertical orientation on the screen base (10).

4. A reactor according to any one of claims 1 to 3, **characterised in that** the heat exchanger plates (5) are assembled to form or more plate bundles.

5. A reactor according to any one of claims 1 to 4, **characterised in that** the height of fill of the catalyst (3) between the heat exchanger plates (5) is situated 15 cm to 20 cm below the top edge of the plate heat exchanger (2) or of the heat exchanger plates (5) thereof.

## Revendications

1. Réacteur pour la transformation catalytique de milieux réactionnels, en particulier de milieux réactionnels gazeux, comportant un échangeur de chaleur à plaques (2) pour le refroidissement d'un catalyseur (3) dans une cuve de réacteur (4), cuve de réacteur (4) dans laquelle sont disposées côte à côte, à distance prédéfinie l'une de l'autre, des plaques d'échangeur de chaleur (5), et entre les plaques d'échangeur de chaleur (5) est disposé, avec formation d'un lit de graisse, le catalyseur (3) traversé par le milieu réactionnel respectif, comportant une amenée d'agent réfrigérant (6) dans la zone du couvercle (7) de la cuve et une évacuation d'agent réfrigérant (8) dans la zone du fond (9) de la cuve,
dans lequel les plaques d'échangeur de chaleur (5) sont réalisées sous la forme de tôles thermiques (5) traversées par l'agent réfrigérant, lesquelles sont constituées d'au moins deux plaques en tôle qui sont soudées ensemble, en des points prédéfinis, avec formation de canaux d'écoulement elliptiques,
dans lequel l'échangeur de chaleur à plaques (2) constitué des tôles thermiques (5) est adapté à la paroi intérieure de la cuve et est placé sur un fond de tamisage (10),
dans lequel le fond de tamisage (10) présente une ouverture de maille qui est inférieure à la grosseur du grain des catalyseurs,
et dans lequel sont prévues, dans la zone du fond (9) de la cuve, une amenée de milieu réactionnel (11) et dans la zone du couvercle (7) de la cuve, une évacuation du milieu réactionnel, et le milieu réactionnel respectif est guidé à contre-courant par rapport à l'agent réfrigérant.

2. Réacteur selon la revendication 1, **caractérisé en ce que** le fond (9) de la cuve et/ou le couvercle (7) de la cuve sont reliés de manière séparable à l'enveloppe de la cuve de réacteur (4) et le fond de tamisage (10) avec l'échangeur de chaleur à plaques (2) et le catalyseur (3), peut être enlevé de la cuve de réacteur (4).

3. Réacteur selon la revendication 1 ou 2, **caractérisé en ce que** les tôles thermiques (5) sont réalisées sous la forme de tôles à surface sensiblement droite et sont disposées en ligne droite dans une orientation verticale sur le fond de tamisage (10).

4. Réacteur selon l'une des revendications 1 à 3, **caractérisé en ce que** les tôles thermiques (5) sont assemblées en un ou plusieurs paquets de plaques.

5. Réacteur selon l'une des revendications 1 à 4, **caractérisé en ce que** la hauteur de remplissage du catalyseur (3) entre les tôles thermiques (5) est comprise entre 15 cm et 20 cm au-dessous du bord supérieur de l'échangeur de chaleur à plaques (2) ou de ses plaques thermiques (5).
